# EUROPÄISCHE PATENTSCHRIFT

(11) **EP 4 160 939 B1**
(45) Veröffentlichungstag und Bekanntmachung des Hinweises auf die Patenterteilung: **15.07.2026**
(21) Anmeldenummer: 21200210.9
(22) Anmeldetag: 30.09.2021
(51) Int. Cl.: H04B 7/26

(54) **AUTOMATISCHE KONFIGURATION VON REPEATERN IN DRAHTLOSEN NETZWERKEN**
AUTOMATIC CONFIGURATION OF REPEATERS IN WIRELESS NETWORKS
CONFIGURATION AUTOMATIQUE DES RÉPÉTEURS DANS LES RÉSEAUX SANS FIL

(43) Veröffentlichungstag der Anmeldung: 05.04.2023
(73) Patentinhaber: ise Individuelle Software und Elektronik GmbH, 26122 Oldenburg (DE)
(72) Erfinder: Sahm, Christoph, 26131 Oldenburg (DE); Marks, Henrik, 26131 Oldenburg (DE)
(74) Vertreter: Angerhausen, Christoph

(56) Entgegenhaltungen:
- US-A1- 2003 179 721
- US-A1- 2004 185 889
- US-A1- 2010 061 292
- US-A1- 2020 288 373

## Beschreibung

### TECHNISCHES GEBIET

Die hier offenbarte Erfindung liegt auf dem Gebiet drahtloser Netzwerke, insbesondere der Konfiguration von Repeatern, mit dem Ziel, die Kommunikation eines Netzwerkknotens mit anderen, weiter entfernten Netzwerkknoten, zu ermöglichen.

### HINTERGRUND

Repeater sind Vorrichtungen zum erneuten Senden empfangener Signale in drahtlosen Netzwerken, und gewährleisten die Kommunikation aller Geräte in solchen Netzwerken. Repeater werden üblicherweise so angeordnet, dass sie möglichst effizient, also mit möglichst geringer Anzahl von Repeatern, Signalübertragungen zwischen möglichst allen Geräten ermöglichen.

In einfachen Netzwerken können Repeater von einem Betreiber angeordnet werden. Ändert sich das Netzwerk, etwa durch eine neue räumliche Anordnung der Netzwerkgeräte oder durch zusätzliche oder weggefallene Geräte, muss in der Regel auch die Anordnung der Repeater geändert werden. Dies erfordert hohen manuellen Aufwand, insbesondere bei großen Netzwerken mit vielen Geräten.

Bei bestimmten Netzwerken, insbesondere auf dem Gebiet der Gebäudeautomation, werden Netzwerkgeräte eingesetzt, die neben ihren eigentlichen Funktionen auch Repeaterfunktionen ausüben können. Es werden also keine zusätzlichen Repeater benötigt. Stattdessen können einige der Geräte als Repeater konfiguriert werden, wobei zu entscheiden, wie viele und welche der Geräte im Netzwerk als Repeater dienen sollen. Werden sämtliche Geräte als Repeater eingesetzt, ist eine Erreichbarkeit aller Geräte zwar sichergestellt; jedoch wird hierdurch mehr Strom verbraucht, als für einen zuverlässigen Betrieb nötig wäre. Zu wenige Repeater oder Repeater am falschen Ort können unter Umständen nicht ausreichen, um die Kommunikation in dem Netzwerk zu gewährleisten.

Ein weiterer Aspekt der Erfindung liegt darin, dass mitunter bevorzugt wird, lediglich die Kommunikation eines bestimmten Geräts mit allen anderen Geräten im Netzwerk zu gewährleisten; unter diesem Aspekt ist es nicht erforderlich, dass jedes Gerät mit jedem anderen Gerät kommunizieren kann. Dieser Aspekt betrifft beispielsweise Situationen, in denen die Geräte des Netzwerks alle Kommunikation über ein solches bestimmtes Gerät abwickeln.

US 2004/185889 A1 offenbart: Ein Verfahren zum Betreiben eines drahtlosen Netzwerks mit einer Basisstation und einer Vielzahl von Außenstationen, das das Senden eines Rundfunksignals von der Basisstation und, als Reaktion auf den Empfang des Rundfunksignals, das Senden eines Bestätigungssignals von einer Außenstation umfasst; wobei zumindest einige der Außenstationen zum Weiterleiten von Signalen für andere Außenstationen dienen, wobei eine Außenstation, die ein Bestätigungssignal weiterleitet, an das Signal eine Kennung anhängt, die die weiterleitende Außenstation identifiziert, und wobei die Basisstation beim Empfang eines Bestätigungssignals alle angehängten Kennungen zur späteren Verwendung beim Weiterleiten von Signalen an die Außenstation speichert, von der das Bestätigungssignal stammt.

US 2010/061292 A1 offenbart: Die Verteilung einer Nachricht in einem Netzwerk kann die Übertragung der Nachricht von einem Ursprungsknoten über einen konkurrenzfreien Zugangskanal an eine erste Gruppe von Knoten in der Nähe des Ursprungsknotens und die Bestimmung einer Teilmenge der ersten Knoten als Relaisknoten umfassen. Ein erster Relaisknoten kann die Nachricht dann über den konkurrenzfreien Zugangskanal an eine zweite Gruppe von Knoten in der Nähe des ersten Relaisknotens weiterleiten.

US 2003/179721 A1 offenbart ein drahtloses Kommunikationsnetzwerk, das gezielte Übertragungen zwischen Netzwerkkomponenten ermöglicht. Zu den Komponenten des drahtlosen Kommunikationsnetzwerks gehören ein Master-Gerät, mehrere Remote-Geräte und mehrere Repeater. Die Komponenten des drahtlosen Kommunikationsnetzwerks kommunizieren über Nachrichten, die ein Steuerfeld und mindestens ein Informationsfeld enthalten. Informationen im Steuerfeld werden von den Komponenten verwendet, um die Weiterleitung der Nachricht oder die Übermittlung einer vordefinierten Antwort auf die Nachricht, beispielsweise einer Signalstärkenantwort, zu bestimmen. Die Komponenten des Netzwerks ermitteln anhand der Nachrichten automatisch ein Kommunikationsziel, das als primärer Kontakt für die Informationsübermittlung dienen kann, und wiederholen diese Bestimmung in vorgegebenen Abständen. So kann sich das drahtlose Kommunikationsnetzwerk im Laufe der Zeit an zusätzliche Komponenten oder an veränderte Umgebungsbedingungen im und um das Netzwerk anpassen.

US 2020/288373 A1 offenbart: Ein Gerät in einem Mesh-Netzwerk kann einen Relaispfad basierend auf den verfügbaren Energieressourcen der Geräte auswählen, die den Relaispfad bilden. Stehen beispielsweise mehrere Relaispfade zur Auswahl, kann das Gerät den Relaispfad mit der geringsten Anzahl batteriebetriebener Geräte wählen. Das Gerät kann die Anzahl der einem Pfad zugeordneten batteriebetriebenen Geräte anhand von Energieinformationen bestimmen, die in einer oder mehreren Nachrichten enthalten sind, die von einem der den Pfad bildenden Geräte empfangen wurden. Nach Auswahl des Relaispfads kann das Gerät eine Antwortnachricht an ein Zwischengerät senden, das den Relaispfad bildet. Das Zwischengerät kann in einigen Beispielen ein Gerät sein, das eine Nachricht mit den Energieinformationen gesendet hat.

Der Erfindung liegt somit die Aufgabe zugrunde, die Kommunikation zwischen Geräten eines drahtlosen Netzwerks möglichst effizient zu gewährleisten.

### ZUSAMMENFASSUNG

Die Erfindung betrifft ein System gemäß dem beigefügten Anspruch 1.

Ausführungsformen betreffen ferner Verfahren sowie Netzwerkgeräte und auch computerlesbare Medien mit darauf gespeicherten Befehlen zur Ausführung von Schritten des vorgenannten Systems.

### KURZE BESCHREIBUNG DER ZEICHNUNGEN

Figuren 1A bis 1D zeigen ein beispielhaftes drahtloses Netzwerk gemäß Ausführungsformen der Erfindung.
Figur 2 zeigt ein erfindungsgemäßes Verfahren, das auf Geräten des drahtlosen Netzwerks ausgeführt werden kann.

### AUSFÜHRLICHE BESCHREIBUNG

Ausführungsformen der Erfindung betreffen ein Netzwerk aus Geräten, die miteinander über Funk kommunizieren. Die Geräte können Desktop-Computer, Laptops, Smartphones oder andere netzwerkfähige Geräte sein. Hierzu zählen etwa in der Gebäudeautomation auch Schalter, Sensoren und Aktuatoren, die zum Betrieb einzelner Bauteile in einem Gebäude eingesetzt werden. Das Netzwerk kann neben drahtlosen Geräten auch solche umfassen, die drahtgebunden kommunizieren oder sowohl drahtgebunden als auch drahtlos kommunizieren können. Zumindest ein Teil der Geräte in dem Netzwerk verfügen über Repeaterfunktionalität und kann konfiguriert werden, um empfangene Signale oder Daten erneut zu versenden und somit deren Reichweite zu vergrößern.

Unter Repeaterfunktionalität wird im vorliegenden Kontext also verstanden, ein bestimmtes empfangenes Signal durch einen Repeater erneut auszusenden. Das Signal wird somit verstärkt, und seine Reichweite vergrößert. Alternativ bedeutet Repeaterfunktionalität, bestimmte empfangene Daten, also etwa ein Datenpaket, eine Nachricht, ein digitales Telegramm, durch den Repeater erneut auszusenden. Die Reichweite dieser Daten wird also vergrößert.

Das Netzwerk kann automatisch einen Konfigurationsvorgang an seinen Geräten durchführen mit dem Ziel, die Repeaterfunktionalität in den Geräten ein- oder auszuschalten. Der Vorgang kann ausgelöst werden durch eine Benutzereingabe an einem der Geräte, oder kann in regelmäßigen Intervallen durchgeführt werden oder als Reaktion auf eine detektierte Änderung in der Anordnung und/oder Anzahl einzelner oder aller Geräte in dem Netzwerk. Ziel der Konfiguration ist, Kommunikation mit allen Geräten in dem Netzwerk zu gewährleisten und dabei überflüssige Signalverstärkungen zu vermeiden.

Der Konfigurationsvorgang wird von einem der Geräte in dem Netzwerk begonnen.

Beispielsweise kann das Gerät durch den Benutzer ausgewählt werden, oder es kann auf das zuletzt zur Konfiguration verwendete Gerät zurückgegriffen werden. Alternativ kann ein Gerät gewählt werden, das das Netzwerk mit anderen Netzwerken verbindet, beispielsweise ein Router.

Das ausgewählte Gerät beginnt mit dem Senden einer Nachricht, die an alle Geräte in dem Netzwerk adressiert ist. Eine solche Nachricht wird in Form einer Broadcast- oder Multicast-Nachricht versendet.

Die Nachricht kann als Konfigurationsnachricht gekennzeichnet sein; Geräte, die diese Nachricht empfangen, können anhand dieser Kennzeichnung selbständig die nachfolgend beschriebenen Schritte ergreifen. Alternativ können diese Schritte in der Nachricht als Befehle enthalten sein und werden durch die betreffenden Geräte gelesen und ausgeführt.

Jedes der Geräte in dem Netzwerk prüft bei Empfang einer Broadcast- oder Multicast-Nachricht, ob es sich um die erste solche Nachricht handelt. Diese Prüfung kann wie die übrigen Schritte als Befehl in der Nachricht enthalten sein oder von dem jeweiligen Gerät selbständig durchgeführt werden. Eine Broadcast-/Multicast-Nachricht wird als erstmalig bezeichnet, wenn sie innerhalb des begonnenen Konfigurationsvorgangs erstmalig von dem Gerät erhalten wird. Alternativ kann eine solche Nachricht als erstmalig betrachtet werden, wenn innerhalb eines vorgegebenen Zeitraums vor dem Empfang der Nachricht keine andere Broadcast-/Multicast-Nachricht empfangen wurde. Wie weiter unten beschrieben wird, senden Geräte nach dem erstmaligen Empfang einer Broadcast-/Multicast-Nachricht ihrerseits eine solche Nachricht an das Netzwerk. Durch die Prüfung vermeidet die Erfindung, dass dies mehrfach erfolgt; Geräte, deren Sende- und Empfangsbereiche sich überschneiden, würden andernfalls immer wieder Broadcast-/Multicast-Nachrichten senden.

Um zu prüfen, ob es sich um eine erste Broadcast-/Multicast-Nachricht handelt, kommen unterschiedliche Maßnahmen in Betracht.

Eine erste Maßnahme umfasst die Verwendung von Zeitstempeln. Bei Empfang einer Broadcast-/Multicast-Nachricht speichert das empfangende Gerät einen aktuellen Zeitstempel und prüft, ob frühere gespeicherte Zeitstempel vorliegen. In diesem Fall vergleicht das Gerät die Zeitdauer zwischen dem Zeitstempel und dem neuesten der früheren Zeitstempel mit einem vorgegebenen Zeitrahmen. Ist die Zeitdauer größer als der Zeitrahmen oder liegt kein früherer Zeitstempel vor, betrachtet das Gerät die Broadcast-/Multicast-Nachricht als erste empfangene Nachricht. Andernfalls wird die Nachricht als redundant betrachtet und ignoriert.

Eine zweite Maßnahme umfasst die Verwendung von Flags. Bei Empfang einer Broadcast-/Multicast-Nachricht prüft das Gerät, ob ein bestimmtes Flag gesetzt ist. Das Flag zeigt an, ob bereits eine "erste" Broadcast-/Multicast-Nachricht empfangen worden war. Ist das Flag gesetzt, wird die Nachricht ignoriert. Ist das Flag gelöscht, wird die Nachricht als erste Broadcast-/Multicast-Nachricht betrachtet, und das Flag wird gesetzt. Das Flag wird wieder gelöscht, wenn nach dem Setzen des Flags der vorgegebene Zeitrahmen verstrichen ist; zu diesem Zweck kann zugleich mit dem Setzen des Flags eine Zählervariable eingerichtet werden, die mit dem vorgegebenen Zeitrahmen initialisiert wird und fortlaufend dekrementiert wird. Nach Ablauf der Zählervariable wird das Flag gelöscht. Alternativ kann das Flag in allen Geräten des Netzwerks gelöscht werden, wenn der Konfigurationsprozess für das gesamte Netzwerk abgeschlossen ist, beispielsweise auf Befehl des ausgewählten Geräts, das den Konfigurationsvorgang begonnen hatte.

Der genannte vorgegebene Zeitrahmen kann von einem Benutzer eingestellt werden, etwa an dem ausgewählten ersten Gerät, und kann in diesem Fall mit der Broadcast-/Multicast-Nachricht mitgesendet und von dem jeweiligen Gerät aus dieser Nachricht gelesen werden. Alternativ kann der Zeitrahmen herstellerseitig an jedem Gerät eingestellt sein. Der Zeitrahmen kann zusätzlich nach Abschluss eines ganzen Konfigurationsvorgangs angepasst werden, und beispielsweise auf Gesamtdauer des Konfigurationsvorgangs oder auf eine davon abgeleitete Dauer, beispielsweise eine doppelte oder anderthalbfache Dauer, gesetzt werden. Durch derartige Werte vermeidet die Erfindung, dass ein Gerät eine Broadcast-/Multicast-Nachricht fälschlich ignoriert, weil bei der Prüfung auf Erstmaligkeit noch ein Zeitstempel aus einem früheren Konfigurationsvorgang verwendet wurde.

Wurde durch eine dieser Maßnahmen festgestellt, dass die empfangene Broadcast-/Multicast-Nachricht die erste ist, die an dem Gerät empfangen wurde, führt das Gerät mehrere Schritte durch. Die Reihenfolge dieser Schritte ist beliebig.

Ein erster Schritt umfasst Senden einer neuen Broadcast-/Multicast-Nachricht durch das Gerät an das Netzwerk. Das ausgewählte Gerät, das den Konfigurationsvorgang begonnen hatte, bildet hierbei eine Ausnahme, weil es im Zuge des Konfigurationsvorgangs Broadcast-/Multicast-Nachrichten lediglich versendet, aber auf die Broadcast-/Multicast-Nachrichten anderer Geräte nicht reagiert oder diese Nachrichten allenfalls verwendet, um deren Anzahl und somit die Aktivität der anderen Geräte zu bestimmen.

Ein zweiter Schritt umfasst Übermitteln einer neuen Nachricht an dasjenige Gerät, von dem die jeweils als erstmalige Nachricht erkannte Broadcast-/Multicast-Nachricht stammte. Die neue Nachricht ist somit keine Broadcast-/Multicast-Nachricht, sondern wird gezielt an das betreffende Gerät adressiert (Peer-to-Peer, P2P). Auf diese Weise bestätigt das Gerät den Empfang der Broadcast-/Multicast-Nachricht.

Ein dritter Schritt wird genau dann ausgeführt, wenn das Gerät seinerseits eine solche P2P-Nachricht erhält. Diese kann beispielsweise von einem anderen Gerät stammen, das wiederum von dem vorliegend erläuterten Gerät eine Broadcast-/Multicast-Nachricht erhielt und das deren Erhalt mittels einer P2P-Nachricht an das vorliegende Gerät bestätigt. Das vorliegende Gerät leitet diese P2P-Nachricht an den gleichen Adressaten weiter, an den es (im obigen zweiten Schritt) auch seine eigene P2P-Nachricht gesendet hatte. Dieses Weiterleiten kann in Form einer Kapselung der erhaltenen P2P-Nachricht in eine neue P2P-Nachricht erfolgen; dies ermöglicht es dem Empfänger der neuen P2P-Nachricht, durch Auslesen der gekapselten Nachricht(en) den Weg aller dieser P2P-Nachrichten durch das Netzwerk zu bestimmen. Alternativ zu einer Kapselung kann das Gerät selbst die Herkunft- und Zieladressen aus der empfangenen P2P-Nachricht lesen und diese in die neue P2P-Nachricht schreiben.

Durch diese Maßnahmen und Schritte breiten sich Broadcast-/Multicast-Nachrichten durch das Netzwerk aus, bis sämtliche erreichbare Geräte erreicht werden, insbesondere auch solche Geräte, die von dem ersten (ausgewählten) Gerät lediglich mittelbar über andere Geräte erreichbar sind. Die Broadcast-/Multicast-Nachrichten können sich nicht endlos fortpflanzen, da die Prüfungen auf "Erstmaligkeit" an allen Geräten Situationen verhindern, in denen sich mehrere Geräte immer wieder gegenseitig zum erneuten Versenden dieser Nachrichten veranlassen.

Durch das Bestätigen von (jeweils erstmaligen) Broadcast-/Multicast-Nachrichten durch jedes der Geräte mittels P2P-Nachrichten sowie durch Weiterleiten von P2P-Nachrichten anderer Geräte an die Sendeadressen dieser Broadcast-/Multicast-Nachrichten liefert die Erfindung Informationen über die Pfade in dem Netzwerk, über die sich die Broadcast-/Multicast-Nachrichten durch das Netzwerk fortpflanzen. Weil sämtliche Pfade auf den jeweils erstmalig erkannten Broadcast-/Multicast-Nachrichten - und somit auf den besten Übertragungswegen - beruhen, spiegeln diese Pfade optimale Wege zur Kommunikation mit Geräten in dem Netzwerk wider.

Letztlich erhält das erste (ausgewählte) Gerät die Angaben sämtlicher Pfade über die erläuterten P2P-Nachrichten. Das erste Gerät wird dadurch in die Lage versetzt, für sämtliche Geräte in dem Netzwerk Pfade zu bestimmen, die hinsichtlich der Signalstärken die beste Übertragungsqualität bieten. Insbesondere wird das erste Gerät in die Lage versetzt, zu bestimmen, welche Geräte für das erste Gerät direkt erreichbar sind, also keines Repeaters bedürfen, und welche nicht, und kann die gleiche Feststellung für sämtliche anderen Geräte treffen: für jedes Gerät kann angegeben werden, welche Geräte für dieses Gerät direkt erreichbar sind. Diese Information kann das erste Gerät beispielsweise aus den erläuterten gekapselten P2P-Nachrichten ermitteln: eine P2P-Nachricht, die an dem ersten Gerät ohne gekapselte P2P-Nachrichten eintraf, kann nur von einem Gerät stammen, das diese Nachricht als erstes versendete und das somit auf eine direkt von dem ersten Gerät erhaltene Broadcast-/Multicast-Nachricht antwortete. Ferner deutet eine P2P-Nachricht, die von dem ersten Gerät empfangen wurde und lediglich eine einzelne gekapselte Nachricht enthält, darauf hin, dass deren Inhalt ursprünglich von einem Gerät stammt, das für das erste Gerät zwar nicht direkt erreichbar ist, jedoch für ein weiteres Gerät erreichbar war, das die Kapselung vornahm. Die Erfindung bildet somit sämtliche Erreichbarkeiten innerhalb des Netzwerks ab. Das erste Gerät kann aus diesen Daten entscheiden, welche Geräte als Repeater konfiguriert werden sollen.

Jeder Pfad beginnt mit dem ersten Gerät und endet mit einem anderen Gerät in dem Netzwerk. Das erste Gerät kann in einer Ausführungsform sämtliche Geräte entlang des Pfades, mit Ausnahme des ersten und des letzten Geräts, als Repeater konfigurieren. Diese Konfiguration kann mittels Nachrichten und darin enthaltenen Befehlen erfolgen, die über die ermittelten Pfade geroutet werden, etwa als P2P-Nachrichten. Die Pakete können Befehle enthalten, mit denen Prozesse auf den besagten Geräten gesteuert werden. Hierdurch werden die Geräte eingestellt, empfangene Signale oder Daten erneut zu versenden und somit zu verstärken. In einer Ausführungsform wird diese Konfiguration in der Reihenfolge der Geräte entlang des Pfades ausgeführt, beginnend mit dem Gerät des Pfades, das auf das erste Gerät folgt und das für das erste Gerät noch direkt erreichbar ist.

Die Broadcast-/Multicast-Nachrichten enthalten Befehle zum Messen von Received-Signal-Strength-Indication (RSSI)-Werten weiterer Geräte. In den erläuterten P2P-Nachrichten, mit denen Geräte auf die Broadcast-/Multicast-Nachrichten antworten oder die von den Geräten weitergeleitet werden, werden die jeweils gemessenen RSSI-Werte übermittelt. Die Werte werden von dem ersten Gerät verwendet werden, um Alternativen für die erläuterten Pfade zu bestimmen, beispielsweise indem Pfade mit höheren RSSI-Werten bevorzugt werden.

In einer weiteren Ausführungsform kann das Konfigurieren von Geräten als Repeater verschoben werden, bis eine konkrete Bedarfssituation auftritt. So kann das erste Gerät nach dem Speichern sämtlicher Pfade zunächst auf das Konfigurieren von Repeatern verzichten. Vielmehr prüft das erste Gerät bei anstehendem Versand einer Nachricht, ob ein Zielgerät dieser Nachricht direkt erreichbar ist oder über einen Pfad erreichbar ist, dessen Geräte der Information in den Pfaden zufolge (beispielsweise bei einer Pfadlänge größer als Zwei) als Repeater dienen (sollen). Ist dies nicht der Fall, werden die Geräte entlang dieses Pfades - und keineswegs sämtliche Geräte aller anderen bekannten Pfade - als Repeater aktiviert und diese Information in einer Datenstruktur abgelegt. Eine solche Datenstruktur kann vermerken, welche Geräte mittels Pfaden verbunden sind, einschließlich ihrer Reihenfolge in den Pfaden, und kann Angaben darüber enthalten, welche Geräte aktuell als Repeater konfiguriert oder aktiv sind. Diese Ausführungsform kann ferner erweitert werden um zeitlich begrenzte Repeaterfunktionen, indem Geräte, die als Repeater konfiguriert sind, diese Funktion nach einer vorgegebenen Zeitspanne, während der dort keine Nachrichten weitergesendet wurden, deaktiviert werden. Die besagte Datenstruktur wird fortlaufend aktualisiert, so dass das erste Gerät mittels der Datenstruktur jederzeit den Repeaterstatus aller Geräte bestimmen kann.

Eine weitere Ausführungsform betrifft die Stromversorgung der Geräte. Das Netzwerk kann sowohl batteriebetriebene Geräte als auch an die Stromversorgung angeschlossene Geräte enthalten. Der oben erläuterte Konfigurationsvorgang kann so modifiziert werden, dass Broadcast-/Multicast-Nachrichten lediglich von der zweiten Gruppe von Geräten versendet werden, um die Ressourcen der anderen Geräte zu schonen.

Eine weitere Ausführungsform betrifft Wiederholungen des Konfigurationsvorgangs. Wie bereits erwähnt, kann die Konfiguration von Repeatern auf eine Benutzereingabe hin oder in regelmäßigen Abständen oder auch als Antwort auf Änderungen in dem Netzwerk wiederholt werden. Diese Änderungen umfassen neben der Anzahl der Geräte und/oder deren Position auch die erfassten Feldstärken / RSSI-Werte aller Geräte. Um solche Änderungen zu ermitteln, kann das erste Gerät in bestimmten Abständen kurze Nachrichten (ping) an sämtliche Geräte senden und prüfen, ob die Absender erhaltener Antwortnachrichten mit den gespeicherten Geräten übereinstimmen. Solche Nachrichten können auch Befehle zum Messen von Feldstärken anderer Geräte umfassen, und das erste Gerät kann derartige Feldstärken in den bereits erläuterten Datenstrukturen speichern und mit früheren Werten vergleichen. Werden Änderungen dieser Werte festgestellt, kann dies auf geänderte Positionen von Geräten hinweisen, und eine erneute Konfiguration des Netzwerks kann vorgenommen werden.

Ausführungsformen der Erfindung umfassen ferner Verfahren, die auf einem oder mehreren Geräten eines Netzwerks ausgeführt werden und die die oben erläuterten Schritte umfassen. Ausführungsformen der Erfindung umfassen auch computerlesbare Medien mit darauf gespeicherten Befehlen, die, wenn sie durch einen oder mehrere Prozessoren ausgeführt werden, die oben erläuterten Schritte durchführen. Ferner umfassen Ausführungsformen der Erfindung auch ein oder mehrere Geräte, die eingerichtet sind, die oben erläuterten Schritte auszuführen.

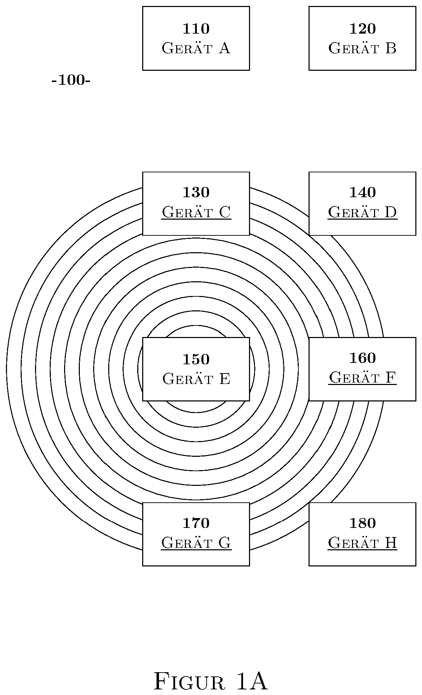

Figur 1A zeigt ein beispielhaftes Netzwerk 100, das die Geräte A bis H beziehungsweise 110 bis 180 umfasst. Das Gerät 150 wurde ausgewählt, beispielsweise von einem Benutzer, um das Netzwerk 100 automatisch hinsichtlich Repeaterfunktionalität zu konfigurieren. Zu diesem Zweck sendet das Gerät 150 zunächst eine Broadcast-/Multicast-Nachricht mit den vorstehend beschriebenen Eigenschaften. In der gezeigten Konstellation liegen die Geräte 130, 140, 160, 170 und 180 (unterstrichen) im Sendebereich des Geräts 150 und sind somit in der Lage, die Nachricht zu empfangen und festzustellen, dass es sich um eine jeweils erstmalige Nachricht dieser Art handelt; jedes dieser Geräte speichert die Absenderadresse der Nachricht, also die Adresse von Gerät 150. Die Geräte 110 und 120 liegen außerhalb des Sendebereichs und empfangen die Nachricht nicht.

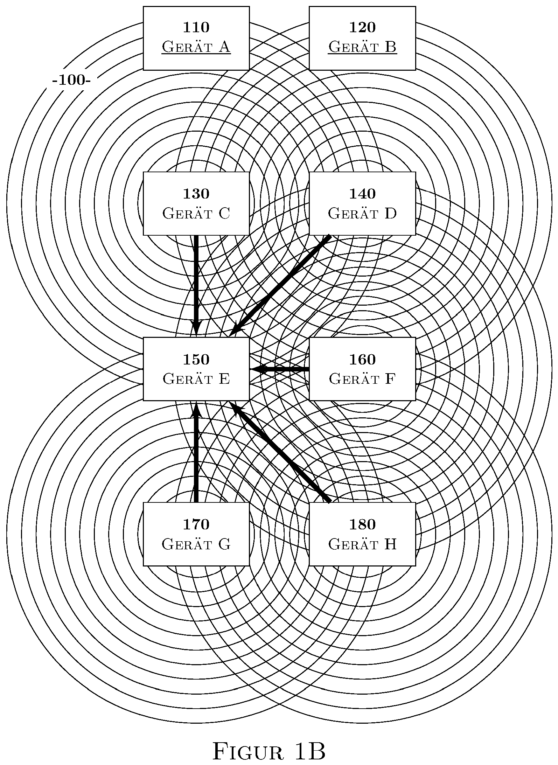

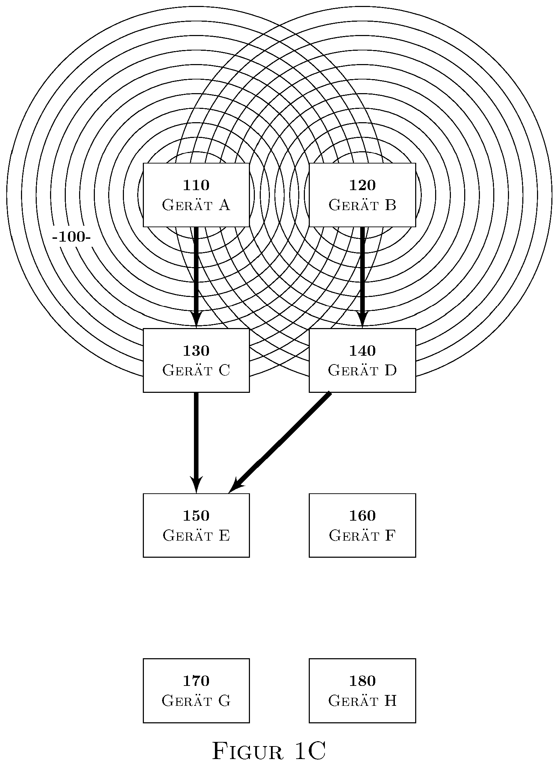

Figur 1B zeigt Versenden von Broadcast-/Multicast-Nachrichten durch jedes der Geräte 130, 140, 160, 170 und 180 als Antwort auf die von Gerät 150 versendete Nachricht. Die von den Geräten 160, 170 und 180 versendeten Nachrichten bleiben ohne Auswirkung, da sie kein weiteres Gerät erreichen, das nicht bereits eine solche Nachricht erhalten hätte: die Geräte 110 und 120 liegen außer Reichweite für die Geräte 160, 170 und 180; das Gerät 150 liegt zwar in Reichweite der Geräte 160, 170 und 180, ignoriert diese jedoch; die Geräte 170 und 180 liegen zwar in Reichweite von Gerät 160, ignorieren deren Nachrichten jedoch, da sie erkennen, dass es sich nicht um erstmalig empfangene Broadcast-/Multicast-Nachrichten handelt; analog ignorieren die Geräte 160 und 180 die Nachrichten von Gerät 170, und ignorieren die Geräte 160 und 170 die Nachrichten von Gerät 180. Ferner ignoriert das Gerät 150 die Broadcast-/Multicast-Nachrichten der Geräte 130 und 140. Die Nachrichten der Geräte 130 und 140 werden von Gerät 160 zwar empfangen, aufgrund der Prüfung auf Erstmaligkeit jedoch ebenfalls ignoriert. Die Nachrichten der Geräte 130 und 140 werden allerdings an den Geräten 110 und 120 (unterstrichen) empfangen und dort auch verarbeitet, wie unten unter Bezugnahme auf Figur 1C beschrieben wird.

Figur 1B zeigt ferner, dass die Geräte 130, 140, 160, 170 und 180 als Reaktion auf die in Figur 1A gezeigte Broadcast-/Multicast-Nachricht jeweils eine an das Gerät 150 adressierte Nachricht senden (Pfeile), beispielsweise eine P2P-Nachricht. Diese Nachricht bestätigt gegenüber Gerät 150 den Erhalt der Broadcast-/Multicast-Nachricht. Das Gerät 150 kann in der Folge die Geräte 130, 140, 160, 170 und 180 als direkt erreichbare Geräte vermerken, beispielsweise in einer geeigneten Datenstruktur.

Figur 1C zeigt Versenden von Broadcast-/Multicast-Nachrichten durch die Geräte 110 und 120 als Antwort auf den Erhalt der Broadcast-/Multicast-Nachrichten von den Geräten 130 beziehungsweise 140. Zwar erhält das Gerät 110 auch die Broadcast-/Multicast-Nachricht von Gerät 140, und Gerät 120 erhält zusätzlich die Nachricht von Gerät 130; jedoch werden beide Nachrichten aufgrund längerer Laufzeit später erhalten als die die vorgenannten Nachrichten, und werden jeweils als nicht erstmalige solche Nachrichten erkannt und infolgedessen ignoriert. Die längere Laufzeit ist hier durch die längeren Strecken zwischen den Geräten 110 und 140 beziehungsweise 120 und 130 gegenüber 110/130 und 120/140 angedeutet. Sie kann jedoch auch durch lokale Gegebenheiten bedingt sein, beispielsweise Wände oder andere Hindernisse, oder unterschiedliche Sende- und/oder Empfangsstärken der beteiligten Geräte. Das Versenden der Broadcast-/Multicast-Nachrichten durch die Geräte 110 und 120 dient der Erkundung weiterer Geräte, bleibt im vorliegenden Fall jedoch ohne Auswirkung: die Geräte 130 und 140 ignorieren diese Nachrichten, da sie bereits erstmalige derartige Nachrichten empfingen (Figur 1B), und weitere Geräte enthält das Netzwerk 100 nicht. Figur 1C zeigt ferner Versenden von jeweils einer Nachricht, die die Geräte 110 und 120 an die zuvor gespeicherten Adressen der Geräte 130 beziehungsweise 140 richten (Pfeile), von denen sie Broadcast-/Multicast-Nachrichten erhielten. Außerdem zeigt Figur 1C Weiterleiten dieser Nachrichten an die ihrerseits gespeicherte Adresse des Geräts 150, wobei das Weiterleiten in einer Ausführungsform eine Kapselung der zuvor empfangenen Nachricht von Gerät 110 beziehungsweise 120 umfasst. Gerät 150 erhält diese Nachrichten und konstruiert daraus deren Übertragungspfade.

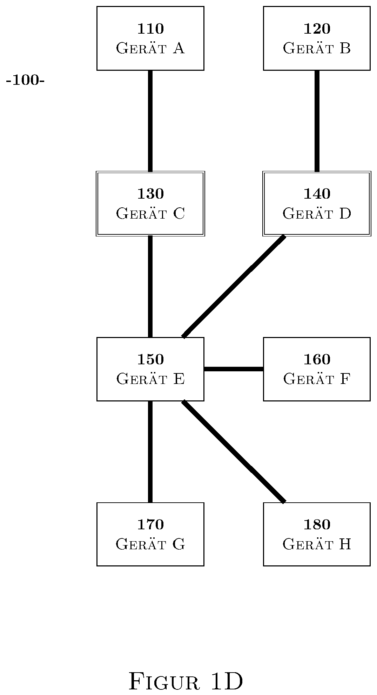

Figur 1D zeigt beispielhaft die durch Gerät 150 ermittelten Routingpfade. Das Gerät 150 kennt nunmehr sämtliche direkt oder indirekt mit ihm verbundenen Geräte und die Pfade, über die Nachrichten an jedes der Geräte versendet werden können. Insbesondere kann das Gerät 150 anhand dieser Angaben entscheiden, welche der Geräte als Repeater zu konfigurieren sind, um Kommunikation mit allen Geräten zu gewährleisten. Als Repeater können beispielsweise sämtliche Geräte konfiguriert werden, die über einen Pfad erreicht werden, der mehr als zwei Geräte (einschließlich Start- und Endpunkt) umfasst. Beispielsweise enthalten die Pfade zu den Geräten 140, 160, 180 lediglich die Geräte 150/140, 150/160 und 150/180 und bedürfen keiner Repeater. Die Geräte 110 und 120 hingegen sind für das Gerät 150 nur mittelbar zu erreichen über die Geräte 130 beziehungsweise 140; diese Geräte 130 und 140 erscheinen in den Pfaden (150, 130, 110) und (150, 140, 120) als "mittlere" Geräte und wären somit als Repeater zu konfigurieren (Geräte doppelt umrandet). Zur konkreten Konfiguration dieser Geräte kann auf RSSI-Werte zurückgegriffen werden, die während des vorstehend beschriebenen Konfigurationsvorgangs ermittelt werden können und die das Gerät 150 berücksichtigen kann, um die Verstärkung von Signalen durch die Repeater einzustellen. Konkret kann beispielsweise die Sendestärke des Geräts/Repeaters 130 so eingestellt werden, dass sie ausreicht, um Pakete verlustfrei an das Gerät 110 zu senden. In bestimmten Ausführungsformen können auch das Gerät 150 selbst und/oder die Endpunkte der Pfade (Geräte 110 und 120) als Repeater konfiguriert werden, beispielsweise wenn das Gerät 150 feststellt, dass die Feldstärken dieser Geräte nicht ausreichen, um verlustfreie Übertragung an die jeweils direkt erreichbaren Geräte zu gewährleisten.

Die Erläuterungen zu den Figuren 1A bis 1D stellen ein Beispiel dar, das ohne weiteres um die eingangs erläuterten Beispiele und Ausführungsformen ergänzt werden kann.

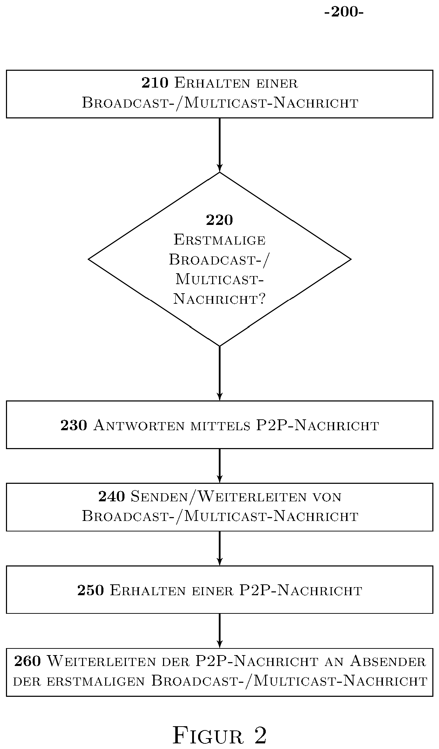

Figur 2 zeigt ein beispielhaftes erfindungsgemäßes Verfahren 200. Das Verfahren zeigt die Schritte, die durch ein beliebiges Gerät in einem Netzwerk durchgeführt werden, beispielsweise eines der in Figur 1A bis 1D gezeigten Geräte 110 bis 180, mit Ausnahme des Geräts 150 (erstes Gerät). Das erste Gerät beginnt einen Konfigurationsvorgang (nicht in Figur 2 gezeigt), in dessen Verlauf es zunächst eine Broadcast- oder Multicast-Nachricht versendet, um Geräte in dem Netzwerk zu identifizieren, die außerhalb seiner Reichweite liegen. In der Folge ignoriert das erste Gerät eintreffende Broadcast-/Multicast-Nachrichten, die im Zuge des Konfigurationsvorgangs von anderen Geräten versendet werden, und verarbeitet lediglich Nachrichten, die explizit an das erste Gerät adressiert sind und von einem der besagten Geräte stammen. Schließlich ermittelt das erste Gerät anhand der in diesen Nachrichten übersendeten Information die Pfade, auf denen die Nachrichten zu dem ersten Gerät gelangten, und bestimmt daraus, welche der Geräte als Repeater konfiguriert werden sollen.

Sobald eines der Geräte in dem Netzwerk von dem ersten Gerät oder einem anderen Gerät eine Broadcast-/Multicast-Nachricht erhält (Schritt 210), prüft das Gerät in Schritt 220, ob es sich bei der Nachricht um eine im Rahmen dieses Konfigurationsvorgangs erstmalig an diesem Gerät erhaltene Broadcast-/Multicast-Nachricht handelt. Beispiele für solche Prüfungen wurden oben erläutert und umfassen etwa das Prüfen und/oder Setzen eines Flags, oder eine Prüfung mittels Zeitstempeln und Zeitfenstern.

Verläuft die Prüfung positiv (erste Nachricht in diesem Konfigurationsvorgang), so führt das Gerät unabhängig voneinander die Schritte 230, 240 und 250/260 aus; diese Schritte können in beliebiger Reihenfolge ausgeführt werden. Der Gegenstand dieser Schritt kann durch entsprechende Befehle in der erhaltenen Broadcast-/Multicast-Nachricht gegeben sein, oder das Gerät kann diese Schritte selbständig ausführen mittels eines vorab in dem Gerät gespeicherten Programms.

In Schritt 230 antwortet das Gerät auf die Broadcast-/Multicast-Nachricht durch eine Nachricht, beispielsweise eine P2P-Nachricht, die direkt an dasjenige Gerät adressiert wird, von dem die Broadcast-/Multicast-Nachricht stammte. Auf diese Weise erhält das adressierte Gerät Kenntnis darüber, welche Geräte seine Broadcast-/Multicast-Nachricht erhielten. In Ausführungsformen mit RSSI-Messungen kann das Gerät in diese Nachricht auch RSSI-Werte schreiben, die die Feldstärken von weiteren Geräten in Reichweite des Geräts angeben.

In Schritt 240 leitet das Gerät die Broadcast-/Multicast-Nachricht weiter oder erzeugt eine neue Broadcast-/Multicast-Nachricht. Dies dient der weiteren Erkundung von Geräten in dem Netzwerk. Da andere Geräte diese Nachricht ignorieren werden, indem sie ihrerseits die Schritte 210 und 220 ausführen, werden sie auf diese Nachricht nur antworten, wenn es sich wiederum um die erste dort erhaltene Broadcast-/Multicast-Nachricht handelt. So werden Endlosschleifen von immer neuen Broadcast-/Multicast-Nachrichten vermieden und gleichzeitig sichergestellt, dass jedes direkt oder indirekt erreichbare Gerät genau einmal das Verfahren 200 ausführt und letztlich in die Sammlung der Pfade im ersten Gerät aufgenommen wird.

In Schritt 250/260 reagiert das Gerät auf den Erhalt einer P2P-Nachricht von einem der anderen Geräte. Die P2P-Nachricht ist an das Gerät adressiert und wird wie in Schritt 230 an dasjenige Gerät gesendet, von dem es die erste Broadcast-/Multicast-Nachricht erhalten hatte. Das Senden dieser P2P-Nachricht kann ein Kapseln der erhaltenen P2P-Nachricht umfassen, wobei die erhaltene P2P-Nachricht beispielsweise als Payload der neuen P2P-Nachricht versendet wird. Alternativ kann das Senden der P2P-Nachricht umfassen, Angaben aus der erhaltenen P2P-Nachricht in deren Payload zu schreiben, also beispielsweise sämtliche Sender- und Zieladressen, die der erhaltenen P2P-Nachricht entnommen werden können. Diese P2P-Nachricht erreicht letztlich das erste Gerät, das dadurch in die Lage versetzt wird, den vollständigen Pfad, auf dem die Broadcast-/Multicast-Nachrichten in dem Netzwerk verarbeitet wurden, zu ermitteln und für das Netzwerk eine Topologie zu erstellen.

Die oben erläuterten Beispiele und Ausführungsformen können sämtlich in das Verfahren 200 integriert werden. So kann das Verfahren beispielsweise automatisch oder auch per Benutzerbefehl wiederholt werden, insbesondere, wenn an einem der Geräte festgestellt wird, dass sich die Anordnung der Geräte oder deren Anzahl geändert haben. Beispielsweise können Geräte in bestimmten Abständen erneute RSSI-Messungen vornehmen und das erste Gerät verständigen, wenn deren Anzahl oder Werte sich über einen vorgegebenen Schwellwert hinaus ändern, oder können den Konfigurationsvorgang auch selbst initiieren, beispielsweise per Nachricht an das ursprüngliche erste Gerät oder auch durch Starten eines neuen Konfigurationsvorgangs, der nunmehr von dem betreffenden Gerät ausgeht.

Die Erfindung beruht auf der Erkenntnis, dass durch die Kombination von Broadcast-/Multicast-Nachrichten einerseits (Fortpflanzung der Nachrichten) und der P2P-Nachrichten andererseits (Rückmeldungen) eine Art virtuelle Topologie des Netzwerks bestimmt werden kann. Dadurch, dass stets nur die jeweils erstmalig eintreffenden Broadcast-/Multicast-Nachrichten verarbeitet werden, gewährleistet die Erfindung, dass nur die (Teil-)Pfade mit den stärksten Feldstärken in die Topologie aufgenommen werden, und vermeidet gleichzeitig Endlosschleifen in der Erzeugung von Broadcast-/Multicast-Nachrichten. Topologien sind in drahtgebundenen Netzwerken bekannt, stellen aber auf dem Gebiet drahtloser Netzwerke ein neuartiges Konzept dar. Zudem ermöglicht die Erfindung eine effiziente Ermittlung derjenigen Geräte, die als Repeater in Frage kommen, und erhält Flexibilität dadurch, dass der Konfigurationsvorgang bei Änderungen im Netzwerk einfach wiederholt wird. In einem solchen Fall kann eine ganz neue Topologie ermittelt werden, die der geänderten Anordnung von Geräten in dem Netzwerk Rechnung trägt.

## Patentansprüche

1. System, umfassend:
ein Funknetzwerk, das mehrere Netzwerkgeräte umfasst;
wobei ein erstes Gerät (150) der Netzwerkgeräte eingerichtet ist, eine Broadcast- oder Multicast-Nachricht zu senden, um Netzwerkgeräte zu identifizieren, die außerhalb seiner Reichweite liegen;
wobei jedes der anderen Netzwerkgeräte eingerichtet ist, als Antwort auf eine von dem ersten Gerät oder einem anderen Netzwerkgerät erstmalig erhaltene Broadcast- oder Multicast-Nachricht (220) eine neue Broadcast- oder Multicast-Nachricht zu senden (240),
wobei jede der gesendeten Broadcast- oder Multicast-Nachrichten eine Aufforderung zum Messen von RSSI-Werten enthält, und
wobei jedes der Netzwerkgeräte eingerichtet ist, den Erhalt der erstmaligen Nachricht mittels einer ersten P2P-Nachricht (230) an den Absender der Broadcast-
/Multicast-Nachricht zu bestätigen, sowie als Antwort auf eine von einem der Netzwerkgeräte erhaltene P2P-Nachricht (250) eine zweite P2P-Nachricht an den
Absender der erstmalig erhaltenen Broadcast- oder Multicast-Nachricht weiterzuleiten (260), wobei die zweite P2P-Nachricht RSSI-Werte sämtlicher Netzwerkgeräte in Reichweite des jeweiligen Netzwerkgeräts sowie sämtliche Sender- und Zieladressen aus der erhaltenen P2P-Nachricht enthält;
wobei das erste Gerät ferner eingerichtet ist, anhand der erhaltenen Adressen der P2P-Nachrichten fürj jedes der außer seiner Reichweite liegenden Netzwerkgeräte diejenigen Netzwerkgeräte zu bestimmen, die für das Übermitteln einer Nachricht an das jeweilige außer Reichweite liegende Netzwerkgerät mindestens erforderlich sind;
wobei das erste Gerät ferner eingerichtet ist, die bestimmten Netzwerkgeräte als Repeater in dem Funknetzwerk zu konfigurieren; wobei aus den Adressen der an das erste Gerät übermittelten P2P-Nachrichten Pfade ermittelt, die Pfade mit den höchsten RSSI-Werten bestimmt und die Geräte dieser Pfade als Repeater konfiguriert werden, wobei jeder Pfad mit dem ersten Gerät beginnt.

2. System nach Anspruch 1, wobei das erste Gerät ferner eingerichtet ist, die bestimmten Netzwerkgeräte erst dann als Repeater in dem Funknetzwerk zu konfigurieren, wenn eine konkrete Nachricht von einem Netzwerkgerät oder dem ersten Gerät an ein für dieses Gerät außer Reichweite liegendes Netzwerkgerät versendet wird.

3. System nach einem der vorstehenden Ansprüche, wobei das Funknetzwerk sowohl batteriebetriebene als auch an die Stromversorgung angeschlossene Netzwerkgeräte umfasst, und wobei die Broadcast- oder Multicast-Nachrichten lediglich von den an die Stromversorgung angeschlossenen Netzwerkgeräten versendet werden.

4. System nach einem der vorstehenden Ansprüche, wobei das Senden einer Broadcast- oder Multicast-Nachricht durch das erste Gerät jedes Mal wiederholt wird, wenn Änderungen an der Anzahl und/oder der Position und/oder der Feldstärke der Netzwerkgeräte erkannt werden.

5. Verfahren, umfassend:
Senden einer Broadcast- oder Multicast-Nachricht durch ein erstes Gerät an Netzwerkgeräte eines Funknetzwerks;
Senden, durch jedes der Netzwerkgeräte als Antwort auf eine von dem ersten Gerät oder einem anderen Netzwerkgerät erstmalig erhaltene Broadcast- oder Multicast-Nachricht, einer neuen Broadcast- oder Multicast-Nachricht, wobei jede der gesendeten Broadcast- oder Multicast-Nachrichten eine Aufforderung zum Messen von RSSI-Werten enthält, und Bestätigen des Erhalts der erstmaligen Nachricht mittels einer ersten P2P-Nachricht an den Absender der erstmaligen Nachricht, sowie, als Antwort auf eine von einem der Netzwerkgeräte erhaltene P2P-Nachricht, Weiterleiten einer zweiten P2P-Nachricht an den Absender der erstmaligen Nachricht, wobei die zweite P2P-Nachricht RSSI-Werte sämtlicher Netzwerkgeräte in Reichweite des jeweiligen Netzwerkgeräts sowie sämtliche Sender- und Zieladressen aus der erhaltenen P2P-Nachricht enthält;
Bestimmen, durch das erste Gerät anhand der erhaltenen Adressen der P2P-Nachrichten, derjenigen Netzwerkgeräte, die erforderlich sind, um eine Nachricht an außer der Reichweite des ersten Geräts liegende Netzwerkgeräte zu senden; und
Konfigurieren der bestimmten Netzwerkgeräte als Repeater in dem Funknetzwerk, wobei aus den Adressen der an das erste Gerät übermittelten P2P-Nachrichten Pfade ermittelt, die Pfade mit den höchsten RSSI-Werten bestimmt und die Geräte dieser Pfade als Repeater konfiguriert werden, wobei jeder Pfad mit dem ersten Gerät beginnt.

6. Verfahren nach Anspruch 5, wobei die bestimmten Netzwerkgeräte erst dann als Repeater in dem Funknetzwerk konfiguriert werden, wenn eine konkrete Nachricht von einem Netzwerkgerät oder dem ersten Gerät an ein für dieses Gerät außer Reichweite liegendes Netzwerkgerät versendet wird.

7. Verfahren nach einem der Ansprüche 5 und 6, wobei das Funknetzwerk sowohl batteriebetriebene als auch an die Stromversorgung angeschlossene Netzwerkgeräte umfasst, und wobei die Broadcast- oder Multicast-Nachrichten lediglich von den an die Stromversorgung angeschlossenen Netzwerkgeräte versendet werden.

8. Verfahren nach einem der Ansprüche 5 bis 7, wobei das Senden einer Broadcast- oder Multicast-Nachricht durch das erste Gerät jedes Mal wiederholt wird, wenn Änderungen an der Anzahl und/oder der Position und/oder der Feldstärke der Netzwerkgeräte erkannt werden.

9. Computerlesbares Medium mit darauf gespeicherten Befehlen, die, wenn sie durch einen Prozessor ausgeführt werden, dass Verfahren nach einem der Ansprüche 5 bis 8 durchführen.

## Claims

1. A system comprising:
a radio network comprising a plurality of network devices;
wherein a first device (150) of the network devices is arranged to transmit a broadcast or multicast message to identify network devices out of its range;
wherein each of the other network devices is arranged to transmit (240) a new broadcast or multicast message in response to a broadcast or multicast message (220) received for the first time by the first device or another network device, wherein each of the transmitted broadcast or multicast messages contains a request to measure RSSI values, and wherein each of the network devices is arranged to confirm receipt of the first-time message by means of a first P2P message (230) to the sender of the broadcast/multicast message, and to forward (260) a second P2P message to the sender of the first-time received broadcast or multicast message in response to a P2P message (250) received by one of the network devices, wherein the second P2P message contains RSSI values of all network devices within range of the respective network device and all sender and destination addresses from the received P2P message;
wherein the first device is further arranged to determine, based on the received addresses of the P2P messages for each of the network devices out of its range, those network devices which are at least required for transmitting a message to the respective out-of-range network device;
wherein the first device is further arranged to configure the determined network devices as repeaters in the radio network; wherein paths are determined from the addresses of the P2P messages transmitted to the first device, the paths with the highest RSSI values are determined and the devices of these paths are configured as repeaters, wherein each path starts with the first device.

2. The system according to claim 1, wherein the first device is further arranged to configure the determined network devices as repeaters in the radio network only when a specific message is sent from a network device or the first device to a network device out of range for this device.

3. The system according to any one of the preceding claims, wherein the radio network comprises both battery-operated network devices and network devices connected to the power supply, and wherein the broadcast or multicast messages are sent only from the network devices connected to the power supply.

4. The system according to any one of the preceding claims, wherein the transmission of a broadcast or multicast message by the first device is repeated each time changes in the number and/or position and/or field strength of the network devices are detected.

5. A method comprising:
transmitting a broadcast or multicast message by a first device to network devices of a radio network;
transmitting, by each of the network devices in response to a broadcast or multicast message received for the first time by the first device or another network device, a new broadcast or multicast message, wherein each of the transmitted broadcast or multicast messages contains a request to measure RSSI values, and confirming receipt of the first-time message by means of a first P2P message to the sender of the first-time message, and, in response to a P2P message received by one of the network devices, forwarding a second P2P message to the sender of the first-time message, wherein the second P2P message contains RSSI values of all network devices within range of the respective network device and all sender and destination addresses from the received P2P message;
determining, by the first device based on the received addresses of the P2P messages, those network devices which are required for transmitting a message to network devices out of range of the first device; and
configuring the determined network devices as repeaters in the radio network, wherein paths are determined from the addresses of the P2P messages transmitted to the first device, the paths with the highest RSSI values are determined and the devices of these paths are configured as repeaters, wherein each path starts with the first device.

6. The method according to claim 5, wherein the determined network devices are configured as repeaters in the radio network only when a specific message is sent from a network device or the first device to a network device out of range for this device.

7. The method according to any one of claims 5 and 6, wherein the radio network comprises both battery-operated network devices and network devices connected to the power supply, and wherein the broadcast or multicast messages are sent only from the network devices connected to the power supply.

8. The method according to any one of claims 5 to 7, wherein the transmission of a broadcast or multicast message by the first device is repeated each time changes in the number and/or position and/or field strength of the network devices are detected.

9. A computer-readable medium having stored thereon instructions which, when executed by a processor, perform the method according to any one of claims 5 to 8.

## Revendications

1. Système, comprenant :
un réseau sans-fil, qui comprend plusieurs dispositifs de réseau ; où un premier dispositif (150) parmi les dispositifs de réseau est configuré pour envoyer un message de diffusion ou un message de multidiffusion afin d'identifier des dispositifs de réseau qui sont hors de portée ;
où chacun des autres dispositifs de réseau est configuré pour, en tant que réponse à un message de diffusion ou un message de multidiffusion reçu pour la première fois de la part du premier dispositif ou d'un autre dispositif de réseau (220), envoyer un nouveau message de diffusion ou un nouveau message de multidiffusion (240),
où chacun des messages de diffusion ou de multidiffusion envoyés comprend une demande de mesure de valeurs RSSI, et
où chacun des dispositifs de réseau est configuré pour confirmer la réception du message reçu pour la première fois au moyen d'un premier message P2P (230) à l'expéditeur du message de diffusion/ de multidiffusion, ainsi que, en tant que réponse à un message P2P reçu de l'un des dispositifs de réseau (250), transmettre un deuxième message P2P à l'expéditeur du message de diffusion ou de multidiffusion reçu pour la première fois (260),
où le deuxième message P2P comprend des valeurs RSSI de tous les dispositifs de réseau à portée du dispositif de réseau respectif ainsi que toutes les adresses de l'expéditeur et de destination provenant du message P2P reçu ;
où le premier dispositif est en outre configuré pour déterminer, sur la base des adresses reçues des messages P2P, pour chacun des dispositifs de réseau hors de sa portée, les dispositifs de réseau nécessaires pour transmettre un message au dispositif de réseau hors de portée respectif ; où le premier dispositif est en outre configuré pour configurer les dispositifs de réseau déterminés comme répéteurs dans le réseau sans-fil ; où, à partir des adresses des messages P2P transmis au premier dispositif, des chemins sont déterminés, les chemins avec les valeurs RSSI la plus élevée sont déterminés et les dispositifs de ces chemins sont configurés comme répéteurs, chaque chemin commençant par le premier dispositif.

2. Système selon la revendication 1, dans lequel le premier dispositif est en outre configuré pour ne configurer les dispositifs de réseau concernés comme répéteurs dans le réseau sans-fil que lorsqu'un message concret est envoyé par un dispositif de réseau ou par le premier dispositif à un dispositif de réseau situé hors de portée de ce dispositif.

3. Système selon l'une des revendications précédentes, où le réseau sans-fil comprend à la fois des dispositifs de réseau alimentés par batterie et des dispositifs de réseau connecté à l'alimentation électrique, et où les messages de diffusion ou de multidiffusion sont uniquement envoyés par les dispositifs de réseau connecté à l'alimentation électrique.

4. Système selon l'une des revendications précédentes, où l'envoi d'un message de diffusion ou de multidiffusion par le premier dispositif est répété chaque fois que des changements du nombre et/ou de la position et/ou de l'intensité de champ des dispositifs de réseau sont détectés.

5. Procédé, comprenant :
Envoyer un message de diffusion ou un message de multidiffusion par un premier dispositif à des dispositifs de réseau d'un réseau sans-fil ;
Envoyer, par chacun des dispositifs de réseau en tant que réponse à un message de diffusion ou de multidiffusion reçu pour la première fois de la part du premier dispositif ou d'un autre dispositif de réseau, un nouveau message de diffusion ou un nouveau message de multidiffusion, où chacun des messages de diffusion ou de multidiffusion envoyés comprend une demande de mesure de valeurs RSSI, et confirmer la réception du message reçu pour la première fois au moyen d'un premier message P2P à l'expéditeur du message reçu pour la première fois, ainsi que, en tant que réponse à un message P2P reçu de l'un des dispositifs de réseau, transmettre un deuxième message P2P à l'expéditeur du message reçu pour la première fois, où le deuxième message P2P comprend des valeurs RSSI de tous les dispositifs de réseau à portée du dispositif de réseau respectif ainsi que toutes les adresses de l'expéditeur et de destination provenant du message P2P reçu ;
Déterminer, par le premier dispositif sur la base des adresses reçues des messages P2P, les dispositifs de réseau nécessaires pour envoyer un message à des dispositifs de réseau hors de la portée du premier dispositif ; et
Configurer les dispositifs de réseau déterminés comme répéteurs dans le réseau sans-fil, où, à partir des adresses des messages P2P transmis au premier dispositif, des chemins sont déterminés, les chemins avec les valeurs RSSI la plus élevée sont déterminés et les dispositifs de ces chemins sont configurés comme répéteurs, chaque chemin commençant par le premier dispositif.

6. Procédé selon la revendication 5, dans lequel les dispositifs de réseau déterminés ne sont configurés comme répéteurs dans le réseau sans-fil que lorsqu'un message concret est envoyé par un dispositif de réseau ou par le premier dispositif à un dispositif de réseau situé hors de portée pour ce dispositif.

7. Procédé selon l'une des revendications 5 et 6, où le réseau sans-fil comprend à la fois des dispositifs de réseau alimentés par batterie et des dispositifs de réseau connecté à l'alimentation électrique, et où les messages de diffusion ou de multidiffusion sont uniquement envoyés par les dispositifs de réseau connecté à l'alimentation électrique.

8. Procédé selon l'une des revendications 5 à 7, où l'envoi d'un message de diffusion ou de multidiffusion par le premier dispositif est répété chaque fois que des changements du nombre et/ou de la position et/ou de l'intensité de champ des dispositifs de réseau sont détectés.

9. Support lisible par ordinateur comprenant des instructions qui, lorsqu'elles sont exécutées par un processeur, réalisent le procédé selon l'une des revendications 5 à 8.
